# EUROPÄISCHE PATENTANMELDUNG

(11) **EP 0 692 629 A1**
(43) Veröffentlichungstag der Anmeldung: **17.01.1996**
(21) Anmeldenummer: 95109084.4
(22) Anmeldetag: 13.06.1995
(51) Int. Cl.: F03D 1/00, F03D 11/04

(54) **Längsachsenwindturbine zur Stromerzeugung**

(30) Priorität: 16.07.1994 DE 9411575 U
(71) Anmelder: Winter, Reinhard, D-18538 Bergen/Rg (DE)
(72) Erfinder: Winter, Reinhard, D-18538 Bergen/Rg (DE)
(74) Vertreter: Richter, Werdermann & Gerbaulet

(57) **Zusammenfassung**

Eine stromerzeugende Längsachsenwindturbine zur besseren harmonischen Einpassung in das Landschaftsbild weist einen als Baueinheit (101 bis 103) ausgebildeten Turm (10) auf, der als Träger für eine horizontal gelagerte Welle dient, an der die Rotorblätter (12) befestigt sind.

## Beschreibung

Die Erfindung betrifft eine Längsachsenwindturbine mit einem Turm als Träger einer horizontal gelagerten Welle, an der Rotorblätter befestigt sind, zur Stromerzeugung.

Zur Stromerzeugung werden nach dem Stand der Technik fossile Brennstoffe, wie Kohle oder Öl, verbrannt, was erhebliche Probleme bei der Abgasreinigung mit sich bringt, oder die sogenannte Kernenergie wird genutzt, wobei hohe Sicherheitsmaßnahmen getroffen werden müssen, um die Emission radioaktiver Stoffe möglichst vollständig zu verhindern oder auf ein unbedenkliches Restmaß zu minimieren. Eine dritte Möglichkeit zur Energiegewinnung konnte in windreichen Gegenden mit sogenannten Großwindanlagen erschlossen werden. Hierbei bedient man sich Windturbinen, die durch Wind antreibbare Rotorblätter aufweisen, deren Drehung zur Stromerzeugung genutzt werden kann. Nach dem Stand der Technik sind zwei Typen von Windturbinen bekannt, nämlich die Längsachsenwindturbine und die Vertikalachsenwindturbine. Die Vertikalachsenwindturbine besitzt eine auf einem Sockel drehbar aufgestellte Mittelsäule, die vom Fuß bis zum Kopf dieser Säule bogenartig gespannte Rotorblätter trägt. Bei diesem Typ dreht sich die gesamte Säule.

Die Längsachsenwindturbine besitzt einen Turm als Träger einer horizontal angeordneten Welle, an der Rotorblätter, zumeist drei, befestigt sind.

Die beschriebenen Windturbinen haben den Nachteil, daß sie - je nach Drehzahl - zum Teil geräuschvoll arbeiten, was nicht nur von den Menschen als störend empfunden wird, sondern auch die Fauna, insbesondere den Vogelflug, stark beeinträchtigt. Darüber hinaus sind die nach dem Stand der Technik bekannten Windturbinen den Anblick der Natur störende Fremdobjekte. Trotz staatlicher Anstrengungen und zur Verfügungstellung von staatlichen und privaten Fördermitteln zur Unterstützung und Etablierung von Windenergie werden örtlicherseits herkömmliche Windturbinen abgelehnt, da das Landschaftsbild zerstört wird.

Es ist Aufgabe der vorliegenden Erfindung, eine alternative Längsachsenwindturbine der eingangs genannten Art zu schaffen, die sich harmonischer in das Landschaftsbild einpassen läßt und insbesondere verschiedene Alternativen zur Stromerzeugung und Stromversorgung zuläßt.

Zur Lösung dieser Aufgabe wird eine Längsachsenwindturbine vorgeschlagen, die durch die im Anspruch 1 angegebenen Merkmale gekennzeichnet ist.

Danach weist der Turm der Längsachsenwindturbine zweckmäßigerweise mindestens einen Wohn- und/oder Nutzraum auf und ist hierzsu entsprechend als Baukörper ausgebildet. Anders als die bisher bei Längsachsenwindturbinen bekannten Türme, schafft die vorliegende Erfindung eine Integration der Rotorwelle mit den Rotorblättern und einem Wohn- oder Nutzraum, dessen Gestaltung an die natürliche Umgebung angepaßt werden kann. Vorbilder hierfür liefern beispielsweise Windmühlen. Insbesondere ist es auch möglich, bereits zu Wohnräumen umgestaltete Windmühlen, deren Mahlwerke stillgelegt und/oder entfernt worden sind, entsprechend umzubauen bzw. wieder aufzurüsten und die integrierte Wohneinheit mit dem durch die Rotorblätter bzw. Windmühlenflügel erzeugten Strom zu versorgen. Die den Turm bildende Baueinheit nimmt dann gleichzeitig Stromerzeugungseinrichtungen, wie Generatoren u.dgl. auf. Weitere Ausgestaltungen der Erfindung sind in den Ansprüche 2 bis 11 beschrieben.

So ist nach einer bevorzugten weiteren Ausbildung vorgesehen, daß der Turm eine obere Kappe aufweist, die einerseits Dach bzw. Decke eines nutzbaren Innenraumes ist und andererseits Träger der horizontal gelagerten Welle für die Rotorblätter. Auf diese Art und Weise kann z.B. bei einer Nutzung des Innenraumes als Wohnraum die Wohneinheit von der Windturbineneinheit getrennt und unabhängig aufgebaut werden, was z.B. eine einheitliche Ausbildung der Kappen und deren Zusammenbau mit jeweils unterschiedlichen, landschaftstypischen Wohn- und Nutzräumen bzw. Aufbauten gestattet.

Ein weiteres Problem in Gegenden mit wechselnden Windrichtungen liegt bei Windturbinen darin, daß bei einer Festinstallation des Turmes bzw. der Rotorwelle je nach Windrichtung zeitweise nur ein Teil der Windenergie nutzbar gemacht werden kann. Um hier Abhilfe zu schaffen, ist nach einer weiteren Ausgestaltung der Erfindung der Turm oder die Kappe um eine vertikale Achse drehbar ausgebildet. Vorbilder hierfür liefert beispielsweise die sogenannte Bockmühle, bei der der Mühlenturm auf einem Hausbaum drehbar gelagert ist. Weniger aufwendig ist es jedoch, den Turm fest zu installieren und die Kappe hierzu drehbar anzuordnen. Vorzugsweise wird hierzu eine Kappe über eine vertikale Achse mit dem Turmunterbau verbunden und über einen mit einem Getriebe gekoppelten Motor gedreht.

Der Turm kann ein- oder mehrgeschossig aufgebaut sein, im letzteren Fall insbesondere mehrere, übereinanderliegende Bauelemente aufweisen, die z.B. Wohneinheiten darstellen. Nach einer weiteren Ausgestaltung der Erfindung ist der Turm hierbei aus mehreren Baueinheiten (Modulen) zusammengesetzt, von denen jede (jedes) z.B. eine Wohneinheit bzw. einen Wohn- oder Nutzraum darstellt. Je nach verfügbarer Fläche, erlaubter oder bevorzugter Mehrgeschossigkeit oder bestehenden Vorschriften kann somit der Turm individuell gestaltet werden, möglicherweise unter Rückgriff auf Fertigbauteile, die vor Ort zusammensetzbar sind.

Aus Stabilitätsgründen bietet es sich ferner an, den Turm nach oben hin zumindestens teilweise konisch zulaufend auszubilden, vorzugsweise kegel- oder kegelstumpfförmig oder konvex. Hierdurch kann noch eine schön anzusehende Bauweise realisiert werden.

Um die Drehzahl (gegebenenfalls in Abhängigkeit von der momentanen Windstärke) beeinflussen zu können, sind die Rotorblätter in ihrem Anstellwinkel veränderbar, vorzugsweise durch Drehung um ihre Längsachse. In einer weiteren Variante ist vorgesehen, die wirksame Rotorblattfläche veränderbar zu gestalten. Unter wirksamer Rotorblattfläche wird die sich aus einer Draufsicht auf die Rotorblätter in Richtung der Längsachse der horizontal gelagerten Welle verstanden.

Vorzugsweise in Anlehnung an bekannte Windmühlenausführungen können nach einer weiteren Ausbildung der Erfindung die Rotorblätter als Windmühlenflügel und - nach einer Weiterbildung - zumindest teilweise zusammenklappbar ausgebildet sein. Unter den vorgenannten Ausführungsformen werden sowohl solche verstanden, bei denen Windmühlenflügel herkömmlicher Art, d.h. mit einer Segeltuchbespannung, verwendet werden, die einrollbar ist, als auch solche Windmühlenflügel, die einzelne, gegebenenfalls herausnehmbare Platten besitzen.

Schließlich kann über ein oder mehrere Scharniere ein Windmühlenflügel um die Längsachse unter Halbierung der Windangriffsfläche zusammenklappbar sein. Die Flügelflächenveränderung bietet die Möglichkeit, daß auch bei großen Windstärken die Windmühle in Betrieb bleiben kann , ohne daß Beschädigungen der Flügel befürchtet werden müssen. Die Rotoren selbst können mit vielen kleinen, verstellbaren Klappen versehen sein, wobei auch eine schuppenartige Ausbildung und Anordnung möglich ist. Die Klappen sind in sich verstellbar, so daß damit die Angriffsfläche für den Winde regulierbar ist.

Schließlich ist nach einer weiteren Ausgestaltung der Erfindung vorgesehen, sämtliche Drehungen des Turmes, der Kappe oder der Flügeleinstellungen über eine Steuereinheit regeln zu können. Dies kann durch eine Steuerung nach Maßgabe einer Bedienungsperson ebenso realisiert werden wie durch Koppelung mit einer Meßeinrichtung, welche die vorherrschende Windrichtung und Windstärke feststellt und in Abhängigkeit von dem Strombedarf die jeweiligen Windturbineneinstellungen selbsttätig regelt.

Ausführungsbeispiele der Erfindung sind in den Zeichnungen dargestellt. Es zeigen
Fig. 1 und 2 eine Drausicht auf eine Längsachsenwindturbine und eine Schnittansicht und
Fig. 3 eine Detailansicht eines Windturbinenflügels.

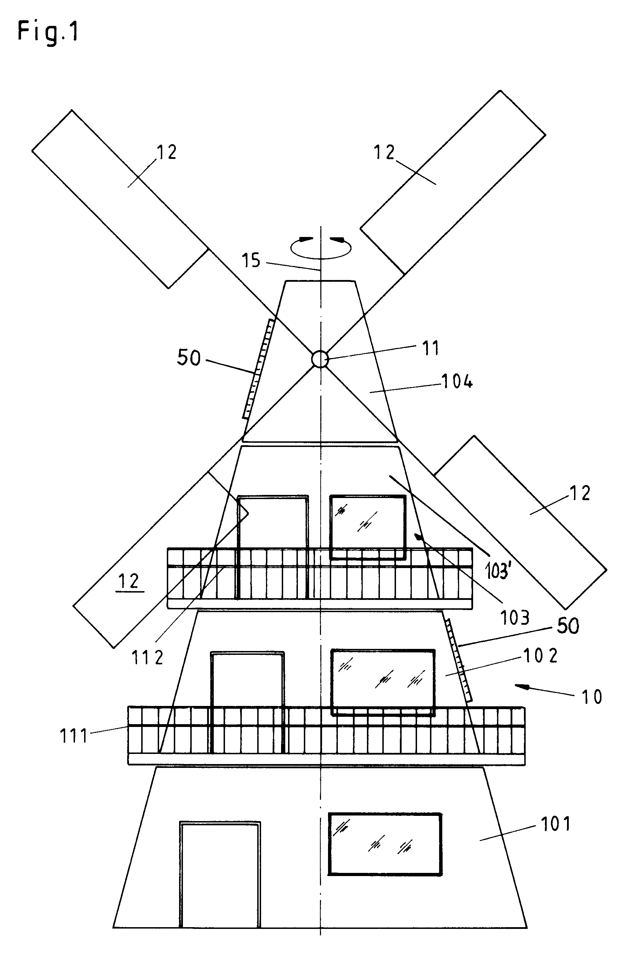

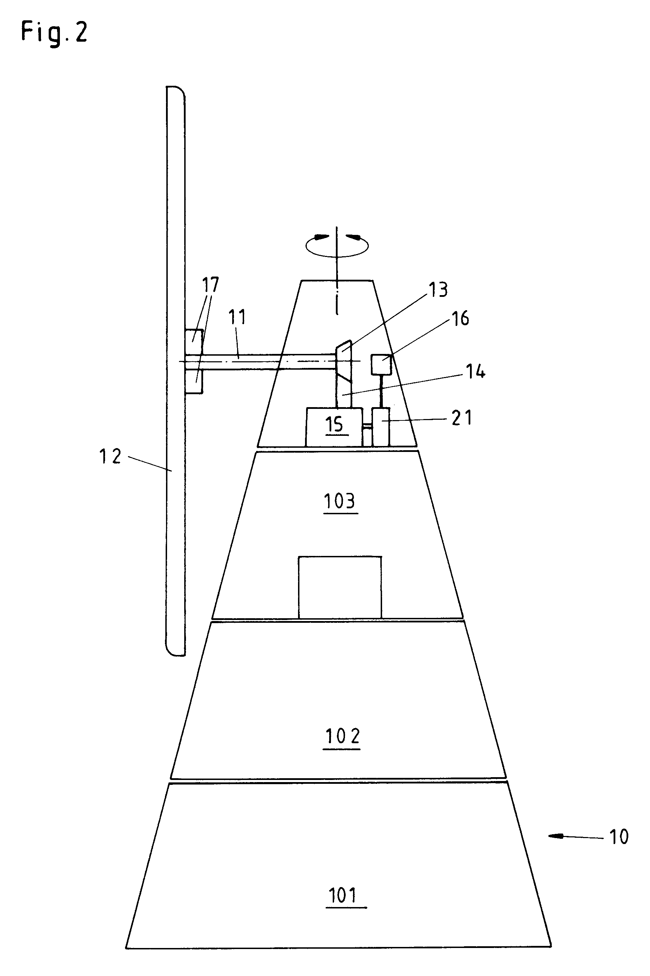

Die aus Fig. 1 und 2 ersichtliche Ausführungsform besitzt einen mehrgeschossigen Turm 10 aus einzelnen Baueinheiten 101 bis 103, die jeweils aus Kegelstümpfen bestehen und eine stetige Mantelfläche aufweisen. Jede dieser Baueinheiten in den oberen Stockwerken kann, wenn die Baueinheiten als Wohnraum genutzt werden sollen, Balkone 111 und 112 aufweisen.

Der Turm 10 wird nach oben durch eine Kappe 104 abgeschlossen, die Träger einer horizontalen Welle 11 ist, an der die Rotorflügel 12 befestigt sind. Die horizontale Welle ist zweckmäßigerweise über ein Getriebe 13 mit einer Vertikalwelle 14 gekoppelt, dessen Drehenergie von einem Generator umgewandelt wird. Der Turm ist um seine Längsachse 15 drehbar, wobei die Drehung mittels eines Antriebsmotors 16, der schematisch in Fig.2 dargestellt ist, antreibbar ist. Gegebenenfalls zusätzlich oder über ein Getriebe mit dem Antriebsmotor 16 gekoppelt ist ein Antrieb 17 vorgesehen, über den die Flügel 12 um ihre Längsachse verstellbar sind und/oder zusammenklappbar sind. Die Drehbarkeit der Kappe 104 kann auch mit anderen mechanischen Mitteln als vorangehend beschrieben durchgeführt werden. So können auch andere Antriebseinrichtungen, z.B. Windleiteinrichtungen, eingesetzt werden.

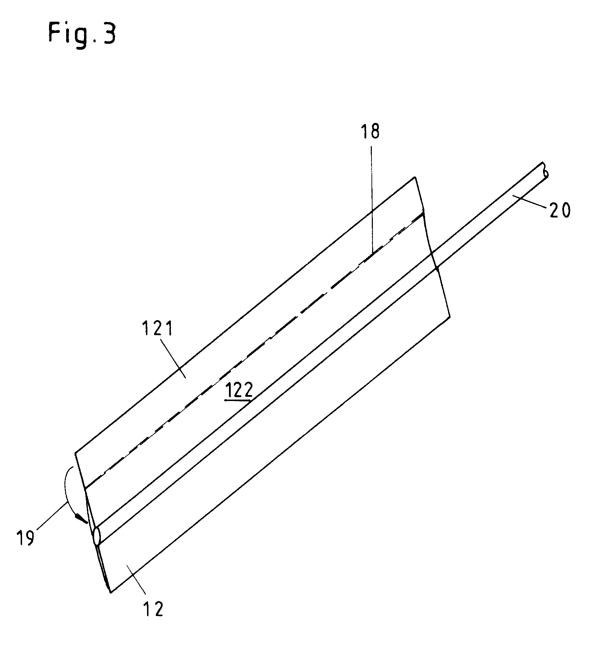

Eine Ausführungsvariante eines zusammenklappbaren Flügels zeigt Fig.3. Hierbei ist ein Scharnier 18 vorgesehen, an dem Flügelteile 121 und 122 befestigt sind und die zusammen als eine Ebene bildend aufgestellt oder parallel aneinanderliegend durch Klappung entsprechend Pfeil 19 zusammenklappbar sind. In der in Fig.3 dargestellten Anordnung ist der Flügel 12 somit hinsichtlich seiner Fläche um 50% vergrößerbar bzw. um ein Drittel zu verkleinern. Zusätzlich kann der Flügel 12 um die Längsachse 20 drehbar ausgebildet sein.

Die Flügeleinstellung, d.h. sowohl seinen Drehwinkel gegenüber der Achse 20 als auch seine Fläche regelt der Motor 17. Im vorliegenden Fall ist eine zentrale Steuereinrichtung 21 vorgesehen, die mit den Motoren 16 und 17 sowie dem Generator und etwa vorhandenen Meßeinrichtungen für Windrichtungs- und Windstärkenmessungen verbunden ist. Diese Steuereinrichtung ermöglicht die Ausrichtung der Kappe zur optimalen Ausnutzung der Windenergie, ferner die optimale Flügeleinstellung.

Die Wandflächen der einzelnen Bauelemente und/oder die obere Kappe 104 der Baueinheit 103 tragen nach einer weiteren Ausführungsform Sonnenzellen 50, bevorzugterweise in großflächiger Ausführungsform (Fig.1), wodurch die Möglichkeit besteht, die einfallende Strahlungsleistung des Sonnenlichtes direkt in elektrische Leistung umzuwandeln. Dadurch wird der Leistungsbereich der Längsachsenwindturbine erweitert, so daß sowohl Windenergie als auch Strahlungsenergie zur Stromerzeugung zur Verfügung steht, entweder einzeln oder in Kombination, wobei davon ausgegangen werden kann, daß in windreichen Gegenden auch ausreichendes Sonnenlicht zur Verfügung steht. Die die Sonnenzellen aufnehmenden Träger sind an der Baueinheit 103 so angeordnet, daß ein Verschwenken und Ausrichten auf die günstigste Sonnenlichteinfallsrichtung möglich ist. Besonders vorteilhaft ist eine Anordnung der Sonnenzellen an dem Turm 10 oder der Kappe 104, wenn diese um eine vertikale Achse 15 drehbar ausgebildet sind.

Nach einer weiteren Ausführungsform sind die Rotorblätter 12 der Turbine ein- oder beidseitig mit Sonnenzellen 50' versehen. Dabei ist besonders vorteilhaft, daß durch die Verstellbarkeit der Rotorblätter ein müheloses Ausrichten der Sonnenzellen auf die günstigste Sonneneinfallrichtung möglich ist. Diese Ausführungsform wird immer dann zur Anwendung bei Windstille, jedoch günstigen Sonnenlichtverhältnissen kommen.

## Patentansprüche

1. Längsachsenwindturbine mit einem Turm (10) als Träger einer horizontal gelagerten Welle (11), an der Rotorblätter (12) befestigt sind zur Stromerzeugung, dadurch gekennzeichnet, daß der Turm (10) mindestens eine Baueinheit (101 bis 103) mit Wohn- und Nutzräumen aufweist.

2. Längsachsenwindturbine nach Anspruch 1, dadurch gekennzeichnet, daß der Turm (10) eine obere Kappe (104) aufweist, die einerseits Dach bzw. Decke der Baueinheit (103) ist und andererseits Träger der horizontal gelagerten Welle (11) für die Rotorblätter (12).

3. Längsachsenwindturbine nach Anspruch 1 oder 2, dadurch gekennzeichnet, daß der Turm (10) oder die Kappe (104) um eine vertikale Achse (15) drehbar ist.

4. Längsachsenwindturbine nach Anspruch 3, dadurch gekennzeichnet, daß die Kappe (104) über eine vertikale Achse (15) mit dem Turmunterbau (103) verbunden ist und daß über einen mit einem Getriebe (13) gekoppelten Motor (14) die Kappe (104) drehbar ist.

5. Längsachsenwindturbine nach einem der Ansprüche 1 bis 4, dadurch gekennzeichnet, daß der Turm (10) mehrgeschossig aufgebaut ist und mehrere, übereinanderliegende einzelnen Baueinheiten (101 bis 103) aufweist.

6. Längsachsenwindturbine nach Anspruch 5, dadurch gekennzeichnet, daß der Turm (10) aus mehreren Baueinheiten (101 bis 103) (Modulen) zusammengesetzt ist, von denen jede (jedes) einen nutzbaren Innenraum darstellt.

7. Längsachenwindturbine nach einem der Ansprüche 1 bis 6, dadurch gekennzeichnet, daß der Turm (10) nach oben hin zumindest teilweise konisch zulaufend ausgebildet ist, vorzugsweise kegel- oder kegelstumpfförmig oder konvex.

8. Längsachsenwindturbine nach einem der Ansprüche 1 bis 7, dadurch gekennzeichnet, daß die Rotorblätter (12) in ihrem Anstellwinkel veränderbar sind, vorzugsweise durch Drehung um ihre Längsachse (20).

9. Längsachsenwindturbine nach einem der Ansprüche 1 bis 7, dadurch gekennzeichnet, daß die wirksame Rotorblattfläche (121,122) veränderbar ist.

10. Längsachsenwindturbine nach Anspruch 9, dadurch gekennzeichnet, daß die Rotorblätter als Flügel (12) ausge-. bildet sind und die Flügel (12) zumindest teilweise zusammenklappbar ausgebildet sind.

11. Längsachsenwindturbine nach einem der Ansprüche 4 bis 10, dadurch gekennzeichnet, daß sämtliche Drehungen des Turmes (10) der Kappe (104) oder Flügeleinstellungen über eine zentrale Steuereinheit (21) regelbar sind.

12. Längsachsenwindturbine nach einem der Ansprüche 1 bis 11, dadurch gekennzeichnet, daß die Baueinheiten (101 bis 103) als Wohnräume ausgebildet sind.

13. Längsachsenwindturbine nach einem der Ansprüche 1 bis 12, dadurch gekennzeichnet, daß an den Außenwandflächen der Baueinheit (101 bis 103) und/oder der Kappe (104) gegebenenfalls auf die Sonnenlichteinfallsrichtung ausrichtbare Sonnenzellen (50) vorgesehen sind.

14. Längsachsenwindturbine nach einem der Ansprüche 1 bis 13, dadurch gekennzeichnet, daß die Rotorblätter (12) der Turbine ein- oder beidseitig Sonnenzellen (50') tragen.
